# EUROPÄISCHE PATENTANMELDUNG

(11) **EP 2 108 533 A1**
(43) Veröffentlichungstag der Anmeldung: **14.10.2009**
(21) Anmeldenummer: 08006958.6
(22) Anmeldetag: 08.04.2008
(51) Int. Cl.: B60G 17/00, B62D 55/116

(54) **Raupenfahrzeug**

(71) Anmelder: Haringer, Alois Johann, 39044 Neumarkt (Bz.) (IT)
(72) Erfinder: Haringer, Alois Johann, 39044 Neumarkt (Bz.) (IT)
(74) Vertreter: Walkenhorst, Andreas

(57) **Zusammenfassung**

Eine Raupenfahrzeug (1) mit einem Fahrwerk (4) mit getrennt antreibbaren Raupenketten (2, 3) und einem auf dem Fahrwerk (4) angeordneten Aufbau (5), wobei das Raupenfahrzeug (1) zwischen dem Fahrwerk (4) und dem Aufbau (5) mindestens eine Federeinrichtung (14) aufweist, die zur Lagerung der Raupen (2, 3) vorgesehen ist, soll ein Raupenfahrzeug (1) der genannten Art angeben, das die aufgezeigten Nachteile eines herkömmlichen Federsystems in einem Raupenfahrzeug vermeidet, ohne gleichzeitig die bekannten Vorteile einer Federung zu beeinträchtigen. Dazu ist erfindungsgemäß vorgesehen, dass die oder jede Federeinrichtung (14) arretierbar ausgeführt ist.

## Beschreibung

Die Erfindung bezieht sich auf ein Raupenfahrzeug mit einem Fahrwerk mit getrennt antreibbaren Raupenketten und einem auf dem Fahrwerk angeordneten Aufbau, wobei das Raupenfahrzeug zwischen dem Fahrwerk und dem Aufbau mindestens eine Federeinrichtung aufweist, die zur Lagerung der Raupen vorgesehen ist.

Aus der DE 198 57 891 ist ein Raupenfahrzeug bekannt, das eine Federeinrichtung zwischen Fahrwerk und Aufbau aufweist.

Die DE 20 2007 006 610 offenbart eine hydraulische Federung für Ladewagen, deren Hydrospeicher durch Wegeventile zu- und abschaltbar sind.

Die DE 33 16 085 zeigt eine Baumaschine auf, die ein hydraulisches Schwingungstilgungssystem, insbesondere ein aktives Feder- und Dämpfungssystem für den Fahrersitz, umfasst.

Vorteile von Fahrzeugen mit Kettenlaufwerken gegenüber Radfahrzeugen sind zum einen die Verteilung der Masse bzw. der Gewichtskraft des Fahrzeugs auf eine größere Fläche und damit eine Verringerung des Drucks auf den Untergrund. Zum anderen wird die Aufstandsfläche erheblich vergrößert und erfasst dabei in unebenem Gelände mehr Aufstandspunkte, wodurch größere Kräfte übertragen werden können und das Fahrzeug eine gleichmäßigere Fahrbewegung erreicht. Insgesamt wird durch diese Ausführung die Geländegängigkeit des Fahrzeugs enorm erhöht.

Gleiskettenfahrzeuge, Kettenfahrzeuge oder Raupenfahrzeuge fahren auf Flach-Gliederketten, auch Gleisketten oder Raupenketten genannt. Zusammen mit dem motorischen Antrieb und dem Chassis bilden die Gleis- oder Raupenketten das so genannte Kettenlaufwerk.

Der prinzipielle Aufbau der Raupen oder Ketten besteht aus stählernen Laufflächengliedern, die mittels Scharnieren zu einer geschlossenen Kette verbunden sind. Typischerweise mittig auf der Innenseite der Kettenglieder sind erhöhte Ausformungen angebracht, die durch die Aneinanderreihung mit den anderen Gliedern eine Spurführung für die Trag- und Laufräder bilden. Weitere Ausformungen auf der Innenseite dienen als Eingriff für das Antriebsrad oder die Antriebsräder.

Das Antriebsrad des Kettenlaufwerks befördert die Kettenglieder in Fahrtrichtung vorwärts, wobei der Rest des Fahrzeugs auf den Lauf- und Führungsrädern mitgezogen wird. Die Kettenantriebe jeder Seite können unabhängig voneinander, bei einigen Bauformen sogar gegenläufig angetrieben werden. Dadurch ist es bei manchen Lenkungsbauformen möglich, auf der Stelle zu drehen.

Gleisketten für schnelleren Vortrieb werden üblicherweise derart ausgeführt, dass die Kettenglieder über eine Federkraft eine zusätzliche Vorspannung erhalten.

Für bestimmte Untergrundformen finden üblicherweise Bauformen mit "Gummi-Ketten", so genannten Laufbändern, Verwendung, die ähnlich wie eine Reifenlauffläche aufgebaut sind: Mehrere Lagen aus Gewebe und Stahl werden mit Reifengummi umspritzt und profiliert. Die Vorteile dieser Ausführung sind, besonders bei hartem Untergrund wie Asphalt, Teer oder Beton, eine wesentlich höhere Laufruhe des Laufbandes, höhere mögliche Geschwindigkeiten und die Schonung des befahrenen Untergrundes. Der Nachteil kann neben einer geringeren Traktion im Gelände in einem wesentlich höheren Verschleiß und somit einer geringeren Lebensdauer der Kette liegen.

Ein Kettenlaufwerk besteht üblicherweise aus folgenden Bestandteilen:
- der Gleiskette aus Metall oder integralen Verbundwerkstoffen, oft mit Gummistollen für den Straßenbetrieb,
- einem Antriebsrad, welches das Drehmoment des Motors direkt über eine mechanische Kupplung oder indirekt über eine hydraulische Kupplung auf die Kette überträgt,
- einem entgegengesetztem Führungsrad, das zugleich, üblicherweise hydraulisch, die Kettenspannung reguliert,
- den meist gefederten Laufrädern oder Laufrollen,
- eventuellen Stützrollen zur Unterstützung des Rücklaufs der Kette, und
- dem Chassis.

Durch die Verwendung einer größeren Anzahl von Laufrädern lässt sich eine gleichmäßigere Lastverteilung, eine feiner abzustimmende Federung sowie eine bessere Anpassung des Kettenlaufwerks an die Geländekontur erreichen. Da aber die Anzahl der Laufräder durch ihren Umfang begrenzt ist, da sie sich einerseits gegenseitig nicht berühren, andererseits aber auch nicht zu klein sein dürfen, wurden als Zwischenlösung zwischen Rollen- und Radlaufwerken so genannte Schachtellaufwerke mit überlappenden Laufrädern entwickelt und verwendet. Dabei werden abwechselnd Einfachrollen und bewegliche Doppelrollen verwendet, die einen gleichen, sehr großen Durchmesser haben, wobei die Doppelrollen außen auf den Kettengliedern liegen und die Einfachrollen dazwischen fahren.

Alternativ dazu sind Kettenlaufwerke mit wechselweise versetzten Doppelrollen denkbar. Erreicht wird mit dieser Ausführungsform ein komplexes und schwer wartbares Laufwerk mit annähernd doppelter Anzahl großer Rollen, die wiederum einen großen Durchmesser haben und damit widerstandsärmer, aber auch mit höherer Belastung rollen. Diese Bauform findet kaum mehr Verwendung, sondern blieb im Wesentlichen auf die Verwendung im militärischen Einsatz und die Zeit des zweiten Weltkriegs beschränkt.

Die üblicherweise verwendete Ausführung ist das so genannte Rollenlaufwerk, bei dem die Kette getrennt vom Vorlauf zurückgeführt wird, gestützt von Stützrollen. Verläuft der Rücklauf der Kette an der Oberseite der gleich großen Rollen, wird diese Ausführung als Radlaufwerk bezeichnet. Beide Bauformen haben spezifische Vor- und Nachteile.

In vorwiegend militärischen Anwendungen eines Kettenlaufwerks sind die Rollen oder Räder federnd gelagert, um eine schnellere Fahrt auch im Gelände zu ermöglichen und die Belastung von Kette und Fahrwerk niedrig zu halten. Die Entwicklung ging von anfangs kleinen Federwegen und einer großen Anzahl kleiner Rollen an einem großen, starren Gestellträger bis zu aktuell großen Federwegen und vergleichsweise großen Rollen.

In zivilen Anwendungen langsam laufender Kettenlaufwerke, typischerweise bei Fördermaschinen im Tagebau oder einigen Ausführungen von Baumaschinen, entfällt in einigen Ausführungen die Federung. In der Mehrzahl der zivilen Anwendungen findet allerdings eine Federung Verwendung, da beispielsweise bei einer Fahrt ohne Arbeitseinsatz in Hanglage oder einer Fahrt mit einem Arbeitseinsatz ohne Hanglage, der aus dem Transportieren einer Ladung mittels einer Schaufel bestehen könnte, eine Federung hinlänglich bekannte Vorteile aufweist. Zu diesen Vorteilen gehört, dass sich die Bodenunebenheiten bei der Fahrt über unebenes Gelände nur verhältnismäßig wenig auf den Fahrzeugaufbau auswirken.

Während des Arbeitseinsatzes eines solchen Raupenfahrzeugs kann eine solche Federung jedoch auch nachteilig sein. Auftretende Niveauschwankungen könnten den Werkzeugeinsatz negativ beeinflussen. Beispielhaft könnte die Aufnahme bei einer Schaufel als Werkzeug durch auftretende Niveauschwankungen behindert oder sogar verhindert werden. Bei einer Querfahrt zum Hang ist eine Federung zudem problematisch und sicherheitsgefährdend. So ist bei einer Schaufel als Werkzeug zu beobachten, dass sich in Abhängigkeit von der Position und dem Gewicht der in der Schaufel befindlichen Ladung und der Schaufelstellung der Gesamtschwerpunkt des Raupenfahrzeugs verändert. Verlagert sich der Gesamtschwerpunkt nach oben, so kann eine gefährliche Kippneigung entstehen. Diese Kippneigung wird auf unebenen Böden durch Schwenk- und Nickbewegungen, die durch die Federung ermöglicht werden, verstärkt.

In Abhängigkeit von der Bodenunebenheit und den Besonderheiten des jeweiligen Arbeitseinsatzes treten gefährliche Neigungen oftmals nur auf einer Seite eines solchen Fahrzeugs auf. So kann der um eine Achse schwenkbaren Aufbau sich senkrecht zu dieser Achse befinden, so dass bei einem Arbeitseinsatz die Raupenseiten unterschiedlich beansprucht werden. Eine herkömmliche Federung ist hier nachteilig, da mitunter auf Grund der Federung nur auf einer Raupenseite Kräfte wirken, die die Arbeitssicherheit gefährden oder einen Einsatz erschweren oder unmöglich machen.

Der Erfindung liegt daher die Aufgabe zugrunde, ein Raupenfahrzeug der genannten Art anzugeben, das die aufgezeigten Nachteile eines herkömmlichen Federsystems in einem Raupenfahrzeug vermeidet, ohne gleichzeitig die bekannten Vorteile einer Federung zu beeinträchtigen.

Diese Aufgabe wird erfindungsgemäß gelöst, indem die oder jede Federeinrichtung arretierbar ausgeführt ist.

Vorteilhafte Ausgestaltungen der Erfindung sind Gegenstand der Unteransprüche.

Die Erfindung geht von der Überlegung aus, dass eine Federung des Raupenfahrzeugs zwar die auf das Fahrwerk wirkenden harten Stöße abfängt und kurzzeitig die Neigung des Raupenfahrzeugs verhindert, aber aufgrund des Wirkungsprinzips der Federeinrichtung nach dem Abfangen über Zug- und Druckstufe wieder in die vorgegebene Ausgangsposition zurückkehrt und die Neigung des Raupenfahrzeugs den Bodenbeschaffenheiten anpasst. Würde man die Position nach dem Eintauchen bzw. Ausfedern, also die Unter- oder Überschreitung der als Nulllinie definierten Position der Federeinrichtung in einem nicht belasteten Zustand, beibehalten können, ohne auf die vorgegebene Ausgangsposition zurückzukehren, wäre eine Schräglage, die beispielsweise das Aufnehmen eines Werkzeugs erschweren oder die Betriebssicherheit gefährden kann, vermeidbar.

Hinsichtlich des geplanten Raupenfahrzeugs erscheint es darüber hinaus zweckdienlich, ein Kraftübertragungselement so zwischen mindestens zwei Zylindern anzuordnen, dass das Kraftübertragungselement sowohl starr mit der jeweiligen Seite des Fahrwerks und der Federeinrichtung verbunden ist und über die Federeinrichtung axial verschiebbar zum Aufbau ist. Hierdurch wird die Kraft zwischen der jeweiligen Seite des Fahrwerks und der Federeinrichtung nur an die Federeinrichtung übertragen.

Mit Hilfe einer Federeinrichtung sind der Aufbau und das Fahrwerk elastisch miteinander verbunden. Dadurch ist es möglich, dass das Fahrwerk relativ zum Aufbau Eigenbewegungen ausführen kann bzw. der Aufbau folgt den Eigenbewegungen des Fahrwerks zeitlich verzögert und in gedämpfter Form. Zudem ist mit Hilfe der Federeinrichtung eine unelastische, starre Verbindung zwischen Fahrwerk und Aufbau möglich. Hierdurch werden Eigenbewegungen des Fahrwerks nicht mehr zeitlich verzögert und gedämpft an den Aufbau weitergegeben, sondern direkt und ungedämpft.

Bei der Federeinrichtung handelt es sich vorzugsweise um eine Einrichtung bestehend aus hydraulischen Zylindern auf beiden Seiten des Aufbaus.

Ein direkt angelenkter hydraulischer Stoßdämpfer wird beim Ausfedern auf Zug und beim Einfedern auf Druck beansprucht. Deshalb wird die Dämpfung beim Ausfedern als Zugstufe, beim Einfedern als Druckstufe bezeichnet. Damit beim Überfahren einer Bodenwelle die Feder ihre Aufgabe erfüllen kann und den dabei entstehenden Stoß des Rades nach oben oder unten (in Richtung Karosserie) auffangen kann, ist die Dämpfungsrate der Druckstufe niedriger als die der Zugstufe.

Aus der Federkennlinie und der auf die Feder wirkenden Kraft ergibt sich der Hubweg. Die Dämpferrate multipliziert mit der Hubgeschwindigkeit ergibt die Dämpfungskraft, die dem Hub entgegen wirkt. In Fahrzeugen werden Dämpfer eingesetzt, die verschiedene Dämpferraten für Zug- und Druckstufe haben. Der Grund dafür ist, dass in Druckrichtung wesentlich höhere Beschleunigungen auftreten können als in Zugrichtung, in der sie durch die Erdanziehungskraft limitiert sind. Ein Dämpfer mit höherer Dämpfung würde die folglich schnelleren Anregungen (härteren Stöße) in Druckrichtung direkter an die Karosserie weitergeben und somit den Komfort mindern. Um dennoch die Schwingungsenergie schnell abzubauen, wird die Dämpfungsrate in Zugrichtung höher gesetzt, da hier die Folgen für den Komfort geringer sind.

Um eine aufgrund der Bodenbeschaffenheit auftretende Schräglage des Fahrwerks des Raupenfahrzeugs weitestgehend auf dieses zu beschränken und für den Aufbau und/oder ein mit dem Aufbau verbundenes Werkzeug eine horizontale Ausrichtung zu erreichen, ist die Federeinrichtung vorteilhafterweise in jeder Position der Zug- oder Druckstufe arretierbar.

Da es während eines Einsatzes des Raupenfahrzeugs insbesondere in Schräglagen vorteilhaft sein kann, eine Raupenseite mit einer Federung und die andere Seite ohne Federung zu betreiben, ist die Arretierung zweckmäßigerweise für beide Raupenseiten unabhängig voneinander möglich.

Um die Federeinrichtung und die zugeordnete Arretierung möglichst komfortabel und betriebssicher betreiben zu können, ist vorteilhafterweise die Ausführung der Federeinrichtung als hydraulische Federeinrichtung vorgesehen.

Auf Grund unterschiedlicher Zug- und Druckkräfte, die auf die vorzugsweise verwendeten hydraulischen Zylinder und Kolben wirken, soll die Federeinrichtung für jede Raupenseite aus mindestens zwei Zylindern und Kolben bestehen, die so angeordnet sind, dass die Zug- und Druckkräfte bei zumindest zwei Zylindern zu unterschiedlichen Zeitpunkten wirken. Vorteilhafterweise soll zumindest ein Zylinder genau dann Druckkräften ausgesetzt sein, wenn auf den anderen Zylinder Zugkräfte wirken und umgekehrt. Dadurch ist eine besonders günstige Anpassung an das Bodenprofil möglich.

Um eine zuverlässige Arretierung der Federeinrichtung in der gewünschten Position zu ermöglichen, weist die die hydraulischen Zylinder mit Hydraulikmedium versorgende Druckmittelleitung vorteilhafterweise Absperrventile auf.

Damit die Arretierung der Federeinrichtungen zuverlässig und jederzeit auslösbar ist, ist sie vorteilhafterweise fernbedienbar, in besonders vorteilhafter und praxisgerechter Ausführung vom Führerstand des Raupenfahrzeugs.

Um eine Anpassung an die Breite von Fahrwegen und somit einen universelleren Einsatz zu ermöglichen, weist das Fahrwerk des Raupenfahrzeugs vorteilhafterweise eine Spurverstellung auf.

Die mit der Erfindung erzielten Vorteile bestehen insbesondere darin, dass sich Bodenunebenheiten und Schräglagen möglichst wenig auf den Fahrzeugaufbau und das zugeordnete Werkzeug im jeweiligen Einsatzmodus der Fahrt, des Arbeitseinsatzes oder einer Kombination aus beidem auswirken und somit ein weitgehend störungsfreier Einsatz sowie eine hohe Betriebssicherheit unabhängig von den Umgebungsbedingungen ermöglicht wird.

Die Erfindung ist in unterschiedlichen Ausführungen eines Raupenfahrzeugs einsetzbar, beispielsweise in Baumaschinen, Planierraupen oder in landwirtschaftlichen Fahrzeugen.

In allen Ausführungen kann sie folgende Vorteile auslösen:
- höhere Kraftübertragung auf den Untergrund,
- bessere Anpassung der Raupen an die Bodenkontur, auch bei beweglichen Doppelrollen, dadurch Erzielung einer höheren Arbeitswirkung,
- Verringerung des Verschleißes des Raupenwerkes,
- Reduzierung der Vibrationen, dadurch geringerer Verschleiß im Hydrauliksystem, beispielsweise der Kolben und Zylinder, und
- geringere Reibung, dadurch geringerer Kraftstoffverbrauch.

Ein Ausführungsbeispiel der Erfindung wird anhand einer Zeichnung näher erläutert. Darin zeigen:
- FIG. 1: eine Frontalansicht des Raupenfahrzeugs,
- FIG. 2: einen Schnitt des Raupenfahrzeugs gemäß FIG. 1, und
- FIG. 3: eine Einzelheit des Raupenfahrzeugs gemäß den FIG. 1 und 2 mit einem Federsystem bestehend aus zwei hydraulischen Zylindern in größerem Maßstab.

Gleiche Teile sind in allen Figuren mit denselben Bezugszeichen versehen.

Ein Raupenfahrzeug 1 mit einem getrennt antreibbare Raupen 2 und 3 aufweisenden Fahrwerk 4 umfasst einen auf dem Fahrwerk 4 angeordneten Aufbau 5 und mindestens ein in den Figuren nicht dargestelltes Werkzeug. Zu jeder Raupe 2, 3 gehören ein Längsträger 6 mit die Raupen 2, 3 umlenkenden und antreibenden Kettenrädern an ihren Enden sowie mit Stützrädern.

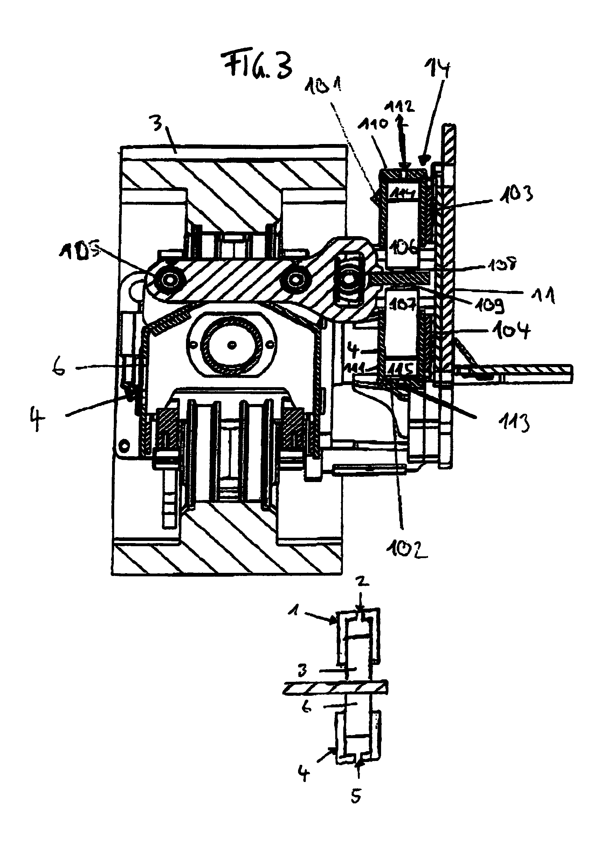

An dem zu den beiden Raupen 2, 3 gehörenden Fahrwerk 4 ist der Aufbau 6 angelenkt und umfasst einen Rahmen 11, der kastenförmig ausgeführt sein kann. Von diesem Rahmen sind in der FIG. 3 nur Teile, beispielsweise Rahmenwandstücke, dargestellt.

Verbunden mit dem Rahmen 11 ist eine sich horizontal sowie senkrecht zur Fahrzeuglängsachse erstreckende Schwenkachse. Sie ist starr am Rahmen 11 befestigt. Die Befestigung kann höhenverstellbar erfolgen. Auf der Schwenkachse ist der Längsträger 6 des Fahrwerks 4 schwenkbar gelagert. Zur Lagerung kann eine am Längsträger 6 befestigte Hülse dienen. Die Schwenkachse und die ihr zugeordnete, fahrwerkseitige Hülse sind unmittelbar über dem Längsträger 6 angeordnet.

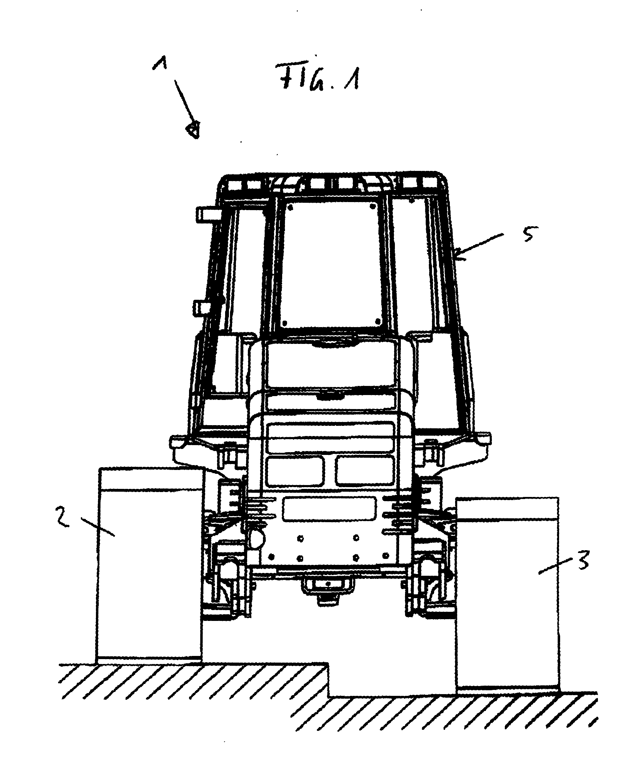

In einem geeigneten Abstand von der Schwenkachse sowie vom vorderen Kettenrad ist am Längsträger eine Federeinrichtung 14 befestigt oder angelenkt. Gemäß dem in den FIG. 1 bis 3 dargestellten Ausführungsbeispiel umfasst die Federeinrichtung 14 zwei zu jedem Fahrwerk 4 gehörende hydraulische Zylinder 101 und 102, die mit ihren zweiten langen Enden 103 und 104 am Aufbau 5 bzw. am Rahmen 11 befestigt oder angelenkt sind. Die aufbauseitige Anlaufstelle befindet sich im Rahmen 11, wie aus FIG. 3 hervorgeht. Die hydraulischen Zylinder 101 und 102 sind jeweils außerhalb des Aufbaus 5 bzw. Rahmens 11 angeordnet. Die hydraulischen Zylinder befinden sich somit kraftseitig zwischen den Raupen 3 und dem Rahmen 11 und sind an diesem befestigt.

Gemäß FIG. 3 erfolgt die Übertragung der Bewegung des Fahrwerks 4 auf die hydraulischen Zylinder 101 und 102 mittels eines sowohl starr mit dem Fahrwerk 4 als auch starr mit den hydraulischen Zylindern 101 und 102 verbundenen Kraftübertragungselements 105. Die hydraulischen Zylinder 101 und 102 bestehen aus jeweils einem Kolben 106 und 107, einer Kolbenstange 108 und 109, einer Zylinderhülse 110 und 111 und einer Zu- und Abflussmöglichkeit 112 und 113 für die hydraulische Flüssigkeit 114 und 115. Für jeden Zylinder können auch mehrere Zu- und Abflussmöglichkeiten vorgesehen sein. Auch können Zu- und Abfluss funktionell und/oder räumlich getrennt angeordnet sein.

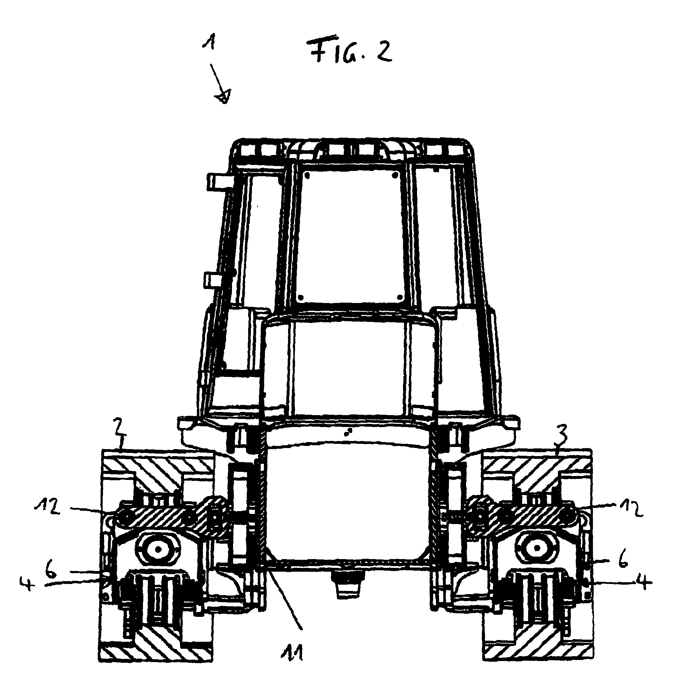

Sowohl das Reservoir für die Hydraulikflüssigkeit, welches außerhalb der Zylinder angeordnet ist, die Zu- und Abflussschläuche als auch zumindest ein notwendiges Ventil, auf welches noch eingegangen wird, sind in den FIG. 2 und 3 nicht dargestellt.

Denkbar und auch gewünscht wäre ein gemeinsames Reservoir für jedes Federsystem, was sowohl platz- und gewichtssparend wäre als auch konstruktive Vorteile für das Ventil hätte. Sowohl Zu- als auch Abflussschläuche für die jeweiligen hydraulischen Zylinder 101 und 102 könnten in einen gemeinsamen Schlauch übergehen, welcher diese Schläuche mit dem Reservoir verbindet. Hierbei ist es wieder denkbar, dass für den Zufluss ein anderes Schlauchsystem verwendet wird als für den Abfluss.

Die Arretierung der hydraulischen Zylinder und somit auch das Umschalten in den dämpfungsfreien Betrieb erfolgt durch ein Ventil oder mehrere Ventile für jede Raupenseite. Diese Ventile können vom Bediener des Raupenfahrzeugs aus seinem Führerstand angesteuert werden. Durch Schließen des Ventils bzw. der Ventile wird ein Fluss der Hydraulikflüssigkeit 114 und 115 verhindert, wodurch die Zylinderkolben 106 und 107 in der jeweiligen Position fixiert werden. Die Bewegungen des Fahrwerks 4 werden somit ungedämpft und direkt an den Aufbau 5 übertragen.

Eine mögliche Ausführungsart ist ein elektromagnetisches Ventil, welches zwischen dem Reservoir für die Hydraulikflüssigkeit und dem jeweiligen hydraulischen Zylinder angeordnet ist. Günstigerweise sollte sich dieses in dem gemeinsamen Zuflussschlauch befinden, da somit ein Ventil für jede Raupenseite ausreichend wäre. Denkbar ist auch eine abflussseitige Integration des Ventils oder andere Ausführungsvarianten.

Der Abstand der Raupen 2 und 3 vom Rahmen 11 kann unterschiedlich groß sein. Die Fahrwerkbreite lässt sich daher an Kundenwünsche anpassen, ohne dass das Grundgerät verändert werden muss. Erreicht wird dies mit Hilfe unterschiedlich langer Lagerhülsen und unterschiedlich langer Kraftübertragungselemente 105 zwischen dem Federsystem 14 und dem Längsträger 6 des Fahrwerks 4 bzw. mit Hilfe unterschiedlich großer Abstandshalter.

### Bezugszeichenliste

- 1: Raupenfahrzeug
- 2, 3: Raupen / Raupenketten
- 4: Fahrwerk
- 5: Aufbau
- 6: Längsträger
- 11: Rahmen
- 14: Federeinrichtung
- 101, 102: Zylinder
- 103,104: Enden
- 105: Kraftübertragungselement
- 106, 107: Kolben
- 108, 109: Kolbenstange
- 110, 111: Zylinderhülse
- 112, 113: Zu- und Abflussmöglichkeit
- 114, 115: Flüssigkeit

## Patentansprüche

1. Raupenfahrzeug (1) mit einem Fahrwerk (4) mit getrennt antreibbaren Raupenketten (2, 3) und einem auf dem Fahrwerk (4) angeordneten Aufbau (5), wobei das Raupenfahrzeug (1) zwischen dem Fahrwerk (4) und dem Aufbau (5) mindestens eine Federeinrichtung (14) aufweist, die zur Lagerung der Raupen (2, 3) vorgesehen ist,
**dadurch gekennzeichnet, dass** die oder jede Federeinrichtung (14) arretierbar ausgeführt ist.

2. Raupenfahrzeug (1) nach Anspruch 1, **dadurch gekennzeichnet, dass** die Federeinrichtung (14) in jeder Position arretierbar ist.

3. Raupenfahrzeug (1) nach Anspruch 1 oder 2, **dadurch gekennzeichnet, dass** die Arretierung für jede Raupenseite einzeln und unabhängig von der Arretierung der jeweils anderen Raupenseite auszulösen ist.

4. Raupenfahrzeug (1) nach einem der Ansprüche 1 bis 3, **dadurch gekennzeichnet, dass** die oder jede Federeinrichtung (14) als hydraulische Federeinrichtung (14) ausgeführt ist.

5. Raupenfahrzeug (1) nach Anspruch 4, **dadurch gekennzeichnet, dass** die oder jede hydraulische Federeinrichtung (14) jeweils ein Druckkolbenpaar (106, 107) aufweist, das beidseitig auf eine zugeordnete Halteplatte wirkt.

6. Raupenfahrzeug (1) nach Anspruch 4 oder 5, **dadurch gekennzeichnet, dass** jede Raupenseite mindestens eine der Federeinrichtung (14) zugeordnete Hydraulikeinheit (101, 102) aufweist.

7. Raupenfahrzeug (1) nach einem der Ansprüche 4 bis 6, **dadurch gekennzeichnet, dass** die oder jede hydraulische Federeinrichtung (14) eine mittels einer mit einem Absperrventil absperrbare Druckmittelleitung umfasst.

8. Raupenfahrzeug (1) nach einem der Ansprüche 1 bis 7, **dadurch gekennzeichnet, dass** die Arretierung der oder jeder Federeinrichtung (14) fernsteuerbar ist.

9. Raupenfahrzeug (1) nach einem der Ansprüche 1 bis 8, **dadurch gekennzeichnet, dass** die Arretierung der oder jeder Federeinrichtung (14) vom Führerstand aus ansteuerbar ist.

10. Raupenfahrzeug (1) nach einem der Ansprüche 1 bis 9, **dadurch gekennzeichnet, dass** das Fahrwerk (4) eine Spurverstellung für die Raupenketten (2,3) aufweist.
